# EUROPEAN PATENT SPECIFICATION

(11) **EP 2 060 431 B1**
(45) Date of publication and mention of the grant of the patent: **09.01.2013**
(21) Application number: 08253708.5
(22) Date of filing: 13.11.2008
(51) Int. Cl.: B62K 11/14, F16D 23/12, F16D 28/00, B60K 23/02

(54) **Power unit for vehicle and vehicle therewith**
Antrieb für ein Fahrzeug und Fahrzeug damit
Unité d'alimentation pour véhicule et véhicule correspondant

(30) Priority: 15.11.2007 JP 2007296466
(43) Date of publication of application: 20.05.2009
(73) Proprietor: Yamaha Hatsudoki Kabushiki Kaisha, Shizuoka-ken Shizuoka 438-8501 (JP)
(72) Inventor: Ishida, Yousuke c/o Yamaha Hatsudoki K.K., Iawata-shi Shizuoka-ken, 438-8901 (JP)
(74) Representative: Schoppe, Fritz

(56) References cited:
- EP-A2- 1 467 112
- US-A- 4 950 214
- US-A1- 2007 023 252
- US-A1- 2007 180 940

## Description

### Technical Field

The present invention relates to a power unit for a vehicle which has a clutch actuator.

### Background Art

Vehicles, such as a motorcycle and an ATV (All Terrain Vehicle), are conventionally known that have a so-called ATM (Automated Manual Transmission) (see, Japanese Patent Application Laid-open No. 2006-17221, for example). The ATM performs disengagement and engagement of a clutch and changing of a transmission gear of a transmission by utilizing an actuator, such as a motor.

The AMT described in Japanese Patent Application Laid-open No. 2006-17221 has a clutch actuator which generates drive force to perform disengagement and engagement of the clutch and an operating force transmission mechanism which transmits the drive force of the clutch actuator to the clutch. The clutch actuator and the operating force transmission mechanism are arranged outside a casing of a power unit. Specifically, the clutch actuator and the operating force transmission mechanism are arranged behind a cylinder of the power unit and above a crankcase. The clutch actuator is attached to the crankcase with a bracket. A drive shaft of the clutch actuator is arranged so as to extend in the vehicle width direction. The operating force transmission mechanism connects the clutch actuator and a clutch disengaging rod (a push rod) on the outside of the power unit.

However, in the vehicle described in Japanese Patent Application Laid-open No. 2006-17221, the clutch actuator and the operating force transmission mechanism are arranged above the crankcase, thus the power unit is extended in the vertical direction by a space for the clutch actuator and the operating force transmission mechanism.

In order to provide an empty space above the crankcase, an arrangement in which the clutch actuator and the operating force transmission mechanism are placed to the outside of the side portion of the crankcase may be devised. However, merely arranging the clutch actuator and the operating force transmission mechanism at the side portion of the crankcase can result in the horizontal width of the whole power unit including them (namely, the length in the vehicle width direction) becoming large. Therefore, the whole power unit becomes larger in the crosswise direction.

EP 1 467 112 A2 describes a device to operate a coupling in a motor vehicle drive. The device comprises a central disengaging device operated by an electric drive through a reducing gear transmission length. The device is inside a coupling socket enclosing the drive shaft with play and a drive housing holds the electric drive outside the coupling socket.

### SUMMARY OF THE INVENTION

It is an object of the present invention to reduce the size of a power unit for a vehicle which has the clutch actuator. This object is achieved by a power unit of claim 1.

An aspect of the invention provides a power unit for a vehicle that comprises: a clutch which has a slide shaft extending in the crosswise direction and which is disengaged and engaged by moving the slide shaft in the axial direction; a clutch actuator which has a rotatable drive shaft; an operating force transmission mechanism which connects the drive shaft of the clutch actuator and the slide shaft and which transmits the operating force of the clutch actuator to the slide shaft; and a casing which accommodates the clutch, the clutch actuator and the operating force transmission mechanism, wherein the clutch actuator and the operating force transmission mechanism are arranged at the left end portion or the right end portion of the inside of the casing, wherein the clutch actuator is arranged so that the drive shaft extends in a direction being perpendicular to the crosswise direction, and the operating force transmission mechanism comprises a worm shaft which is disposed at the drive shaft, a first solid of revolution which has a worm wheel portion that engages with the worm shaft and which rotates around an axial center parallel to an axial center of the slide shaft in accordance with the rotation of the worm shaft, a second solid of revolution which rotates around the axial center of the slide shaft when viewed from the axial direction of the slide shaft in accordance with the rotation of the first solid of revolution, and a force direction converting mechanism which converts torque of the second solid of revolution into force in the axial direction of the slide shaft and which moves the slide shaft in the axial direction in accordance with the rotation of the second solid of revolution.

With the abovementioned power unit for a vehicle, the clutch actuator and the operating force transmission mechanism can be arranged at the left end portion or the right end potion of the inside of the casing, thereby the clutch actuator and the operating force transmission mechanism do not project to the outside of the casing. Further, the operating force transmission mechanism has the first solid of revolution and the second solid of revolution which axes deviate from each other. The operating force is transmitted via the plurality of the solids of revolution. Accordingly, without disposing a rod or the like, which further projects in one direction, the operating force can be transmitted from the clutch actuator to the slide shaft. Therefore, the operating force transmission mechanism can be compactly arranged in the casing. Furthermore, the clutch actuator is arranged so that the drive shaft extends in the direction being perpendicular to the crosswise direction, and thereby projecting of the clutch actuator in the crosswise direction can be suppressed. Therefore, the clutch actuator can be compactly arranged in the casing.

Accordingly, downsizing of a power unit for a vehicle which has a clutch actuator can be achieved.

### Brief Description of the Drawings

Embodiment of the present invention is described hereinafter, by way of example only, with reference to the drawings.
Fig. 1 is a side view of a motorcycle.
Fig. 2 is a perspective view of an automatic transmission operation switch.
Fig. 3 is a side view of a power unit.
Fig.4 is a side view of the power unit with a cover cut.
Fig. 5 is a plane view in which a part of the power unit is removed.
Fig. 6 is a schematic view which shows main components of the power unit.
Fig. 7(a) is a side view of an operating force transmission mechanism when the clutch is engaged, and Fig. 7(b) is a schematic view which shows positions of balls of a ball cam in the same state.
Fig. 8 is a cross-sectional view of a first solid of revolution.
Fig. 9 is a cross-sectional view of a second solid of revolution.
Fig. 10 is a cross-sectional view of the ball cam when the clutch is engaged.
Fig. 11(a) is a side view of the operating force transmission mechanism when the clutch is at a starting position of disengagement, and Fig. 11(b) is a schematic view which shows positions of the balls of the ball cam when the clutch is at the starting position disengagement.
Fig. 12(a) is a side view of the operating force transmission mechanism when the clutch is disengaged, and Fig. 12(b) is a schematic view which shows positions of the balls of the ball cam in the same state.
Fig. 13 is a cross-sectional view of the ball cam when the clutch is disengaged. Detailed Description

In the following, embodiments of the present invention are described in detail with reference to the drawings.

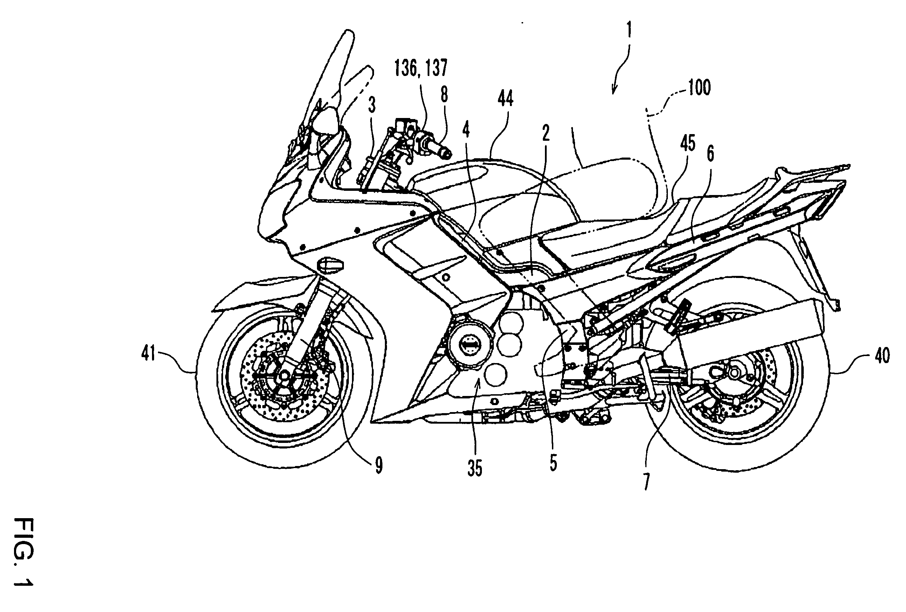

Fig.1 is a side view which shows an example of a motorcycle 1 according to the present embodiment. The motorcycle 1 of Figure 1 has a body frame 2. The body frame 2 has a head pipe 3, a main frame 4 which extends backward from the head pipe 3 and a rear-arm bracket 5 which extends downward from a rear part of the main frame 4.

A front fork 9 is supported by the head pipe 3. A steering handle 8 is disposed at the top end of the front fork 9 and a front wheel 41 is disposed at the bottom end of the front fork 9. Further, a fuel tank 44 is arranged on the main frame 4, and a seat 45 is arranged to the rear side of the fuel tank 44. The seat 45 is mounted on a seat rail 6. A power unit 35 is suspended by the main frame 4 and a rear-arm bracket 5. A front end part of a rear arm 7 is supported by the rear-arm bracket 5 pivotally in vertical direction. A rear wheel 40 is supported on the rear end part of the rear arm 7.

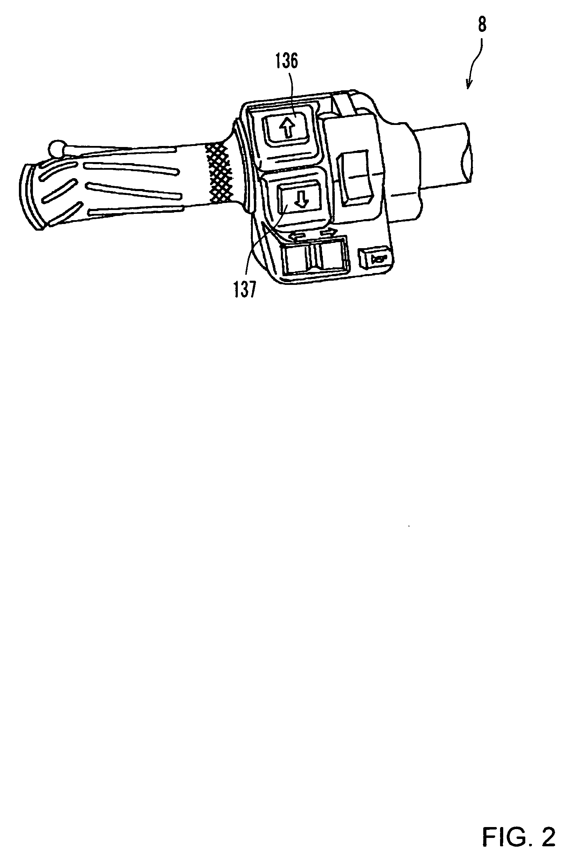

Automatic transmission operation switches 136, 137 (see Fig. 2) which are operated by a rider 100 sitting astride the seat 45 are disposed at the steering handle 8.

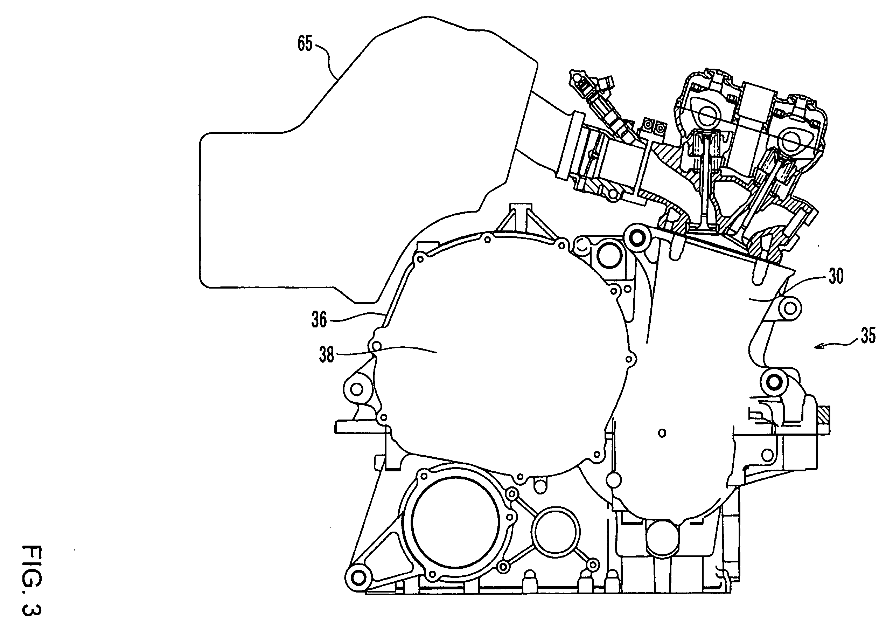

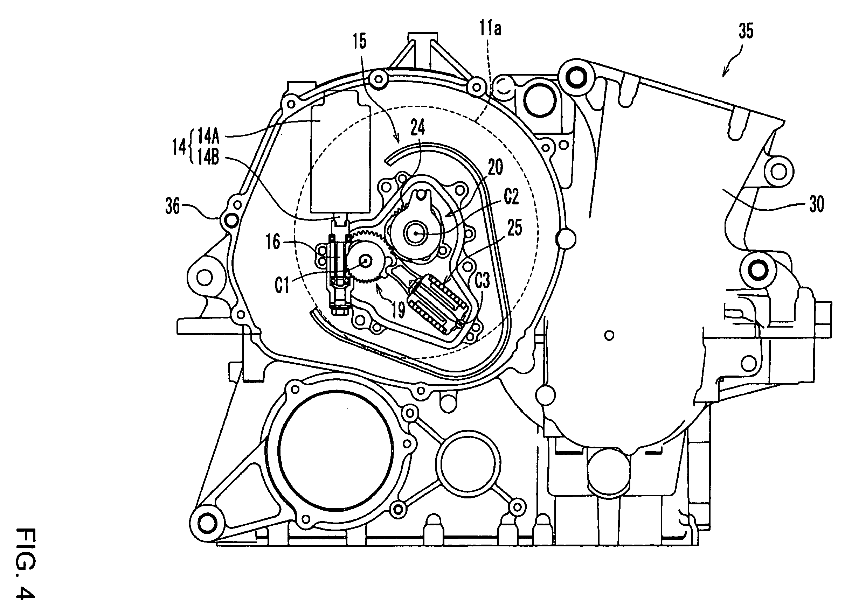

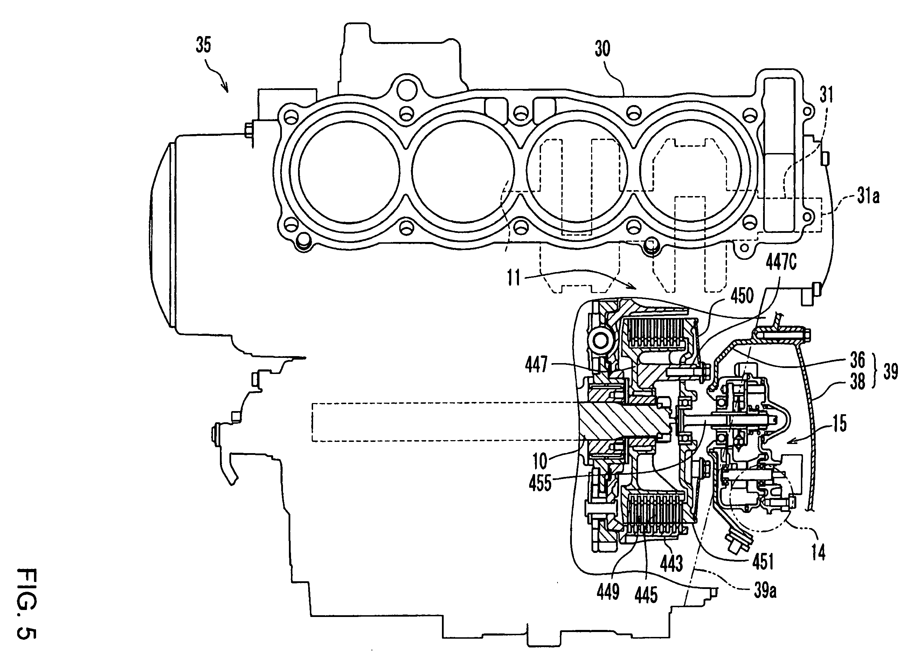

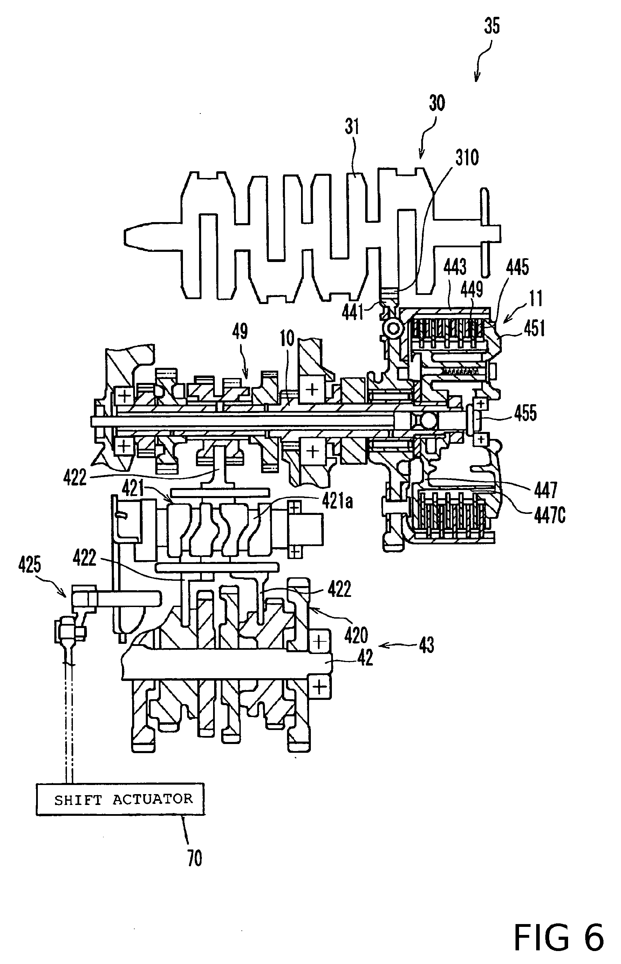

Fig. 3 is a right side view of the power unit 35. Here, a reference numeral 65 denotes an air cleaner. Fig. 4 is a right side view of a main part of the power unit 35 when a cover 38 is detached. Fig. 5 is a plane view in which a part of the power unit 35 is removed. Fig. 6 is a view which schematically shows an inner structure of the power unit 35. As shown in Fig. 6, the power unit 35 has an engine 30, a clutch 11 and a transmission 43. Further, the power unit 35 has the clutch actuator 14 (see Fig. 4) which disengages and engages the clutch 11 and a shift actuator 70 which operates the transmission 43.

Although the engine 30 is not limited to a specific type, the engine 30 is a water-cooled, transverse four-stroke cycle and parallel four-cylinder engine in the present embodiment. However, , the engine 30 is not limited to an internal combustion engine such as a gasoline engine, but may be another kind of engine such as a motor (e.g., an electric motor) engine. Further, the engine 30 may be a combination of the gasoline engine and the motor engine. The engine 30 has a crankshaft 31 which extends in the crosswise direction. A gear 310 is formed at the crankshaft 31.

As shown in Fig. 6, the clutch 11 of the present embodiment is a multiplate friction clutch. However, the type of the clutch 11 is not limited to the multiplate friction clutch. The clutch 11 has a clutch housing 443, a plurality of friction plates 445 which are integrally disposed at the clutch housing 443, a clutch boss 447, a plurality of clutch plates 449 which are integrally disposed at the clutch boss 447 and a pressure plate 451 which performs pressurized contact between the friction plates 445 and the clutch plates 449.

A gear 441 is supported on a main shaft 10 in a state free to rotate against the main shaft 10. The gear 441 is engaged with the gear 310 of the crankshaft 31. The clutch housing 443 is fixed to the gear 441 and the clutch housing 443 rotates integrally with the gear 441. Accordingly, torque is transmitted from the crankshaft 31 to the clutch housing 443 via the gear 441.

As shown in Fig. 5, a plurality of cylindrical guiding portions 447C which are integrally disposed to the clutch boss 447 and which are extended in the axial direction of the main shaft 10 are arranged inside the cylindrical clutch boss 447. A spring 450 which is composed of a disc spring is attached to the guiding portion 447C. The spring 450 urges the pressure plate 451 leftward in Fig. 5. In other words, the spring 450 urges the pressure plate 451 in the direction that the clutch 11 engages.

Details are described later, but the pressure plate 451 is driven by the clutch actuator 14 and moved in the axial direction of a slide shaft 455. When the clutch 11 is engaged, the slide shaft 455 moves leftward in Fig. 5 and the pressure plate 451 also moves leftward similarly. As a result, the pressure plate 451 which receives the urging force of the spring 450 press contacts the friction plate 445 onto the clutch plate 449. Accordingly, friction force is generated between the friction plate 445 and the clutch plate 449, thereby drive force is transmitted from the clutch housing 443 to the clutch boss 447 in the clutch 11.

On the other hand, when the clutch 11 is disengaged, the slide shaft 455 moves rightward in Fig. 5 and the pressure plate 451 also moves rightward in Fig. 5 against the urging force of the spring 450. As a result, the press contact state between the friction plate 445 and the clutch plate 449 is released. Accordingly, drive force is not transmitted from the clutch housing 443 to the clutch boss 447 in the clutch 11.

In this manner, depending on magnitude of the drive force of the clutch actuator 14 and the urging force of the spring 450, the pressure plate 451 moves to one side or the other side of the main shaft 10. According to this movement, the clutch 11 goes into an engaged state or a disengaged state.

As shown in Fig. 6, the transmission 43 has the main shaft 10 which is arranged parallel to the crankshaft 31 of the engine 30 and a drive shaft 42 which is arranged parallel to the main shaft 10. Multistage transmission gears 49 are disposed at the main shaft 10. Multistage transmission gears 420 are also disposed at the drive shaft 42. The transmission gear 49 on the main shaft 10 engages with the transmission gear 420 on the drive shaft 42. Here, in Fig. 6, the transmission gear 49 and the transmission gear 420 are illustrated as being separated. Except for a selected pair of transmission gears, either or both of the transmission gears 49 and the transmission gears 420 are arranged so as to be in a condition of idling rotation (that is, a condition of free rotation) against the main shaft 10 or the drive shaft 42. Accordingly, the transmission of torque from the main shaft 10 to the drive shaft 42 is performed only via the selected pair of the transmission gears.

The gear change operation to change a transmission gear ratio by selecting the transmission gear 49 and the transmission gear 420 is performed by the rotation of a shift cam 421. The shift cam 421 has a plurality of cam grooves 421a and a shift fork 422 is attached to each of the cam grooves 421a. Each of the shift forks 422 is engaged with the predetermined transmission gear 49 and transmission gear 420 of the main shaft 10 and the drive shaft 42. Due to the rotation of the shift cam 421, the shift fork 422 is guided by the cam groove 421a and moves in the direction of each axis. Only a pair of the transmission gear 49 and the transmission gear 420 at the positions which correspond to a rotational angle of the shift cam 421 are in a fixed state respectively to the main shaft 10 and the drive shaft 42 by a spline. Positions of the transmission gears are thereby determined and the torque is transmitted between the main shaft 10 and the drive shaft 42 at a predetermined transmission gear ratio via the transmission gear 49 and the transmission gear 420.

A shift actuator 70 is connected to the shift cam 421 via a connecting mechanism 425. The type of the shift actuator 70 is not specifically limited. For example, an electric motor etc. can be preferably utilized. The shift actuator 70 rotates the shift cam 421 via the connecting mechanism 425 and performs a gear change operation.

### «Clutch actuator and operating force transmission mechanism»

Next, the clutch actuator 14 which generates drive force for performing disengagement and engagement of the clutch 11 and an operating force transmission mechanism 15 which transmits the drive force of the clutch actuator 14 are explained.

As shown in Fig. 4 and Fig. 5, the clutch actuator 14 and the operating force transmission mechanism 15 are arranged inside a casing 39 of the power unit 35. Specifically, as shown in Fig. 5, the casing 39 of the power unit 35 has a crankcase 36 which accommodates the crankshaft 31 and the clutch 11, and a cover 38 which covers a part of a right end portion of the crankcase 36. The clutch actuator 14 and the operating force transmission mechanism 15 are arranged outside the crankcase 36 and inside the cover 38. In other words, the clutch actuator 14 and the operating force transmission mechanism 15 are covered by the cover 38 on the outside of the crankcase 36.

The clutch actuator 14 and the operating force transmission mechanism 15 are arranged at one end part in the crosswise direction in the casing 39. The clutch actuator 14 and the operating force transmission mechanism 15 are possible to be arranged at either of the left end part or the right end part in the casing 39. In the present embodiment, these are arranged at the right end part. Further, in the present embodiment, the clutch actuator 14 and the operating force transmission mechanism 15 are arranged at the side where the clutch 11 is arranged in the crosswise direction. However, it is also possible to arrange the clutch actuator 14 and the operating force transmission mechanism 15 at the side which is opposite in the crosswise direction to the side where the clutch 11 is arranged.

As shown in Fig. 4, the clutch actuator 14 according to the present embodiment includes an electric motor. The clutch actuator 14 has a motor body 14A which is approximately cylindrical and a drive shaft 14B which projects downward from the motor body 14A. The clutch actuator 14 is arranged so that the motor body 14A and the drive shaft 14B extend vertically.

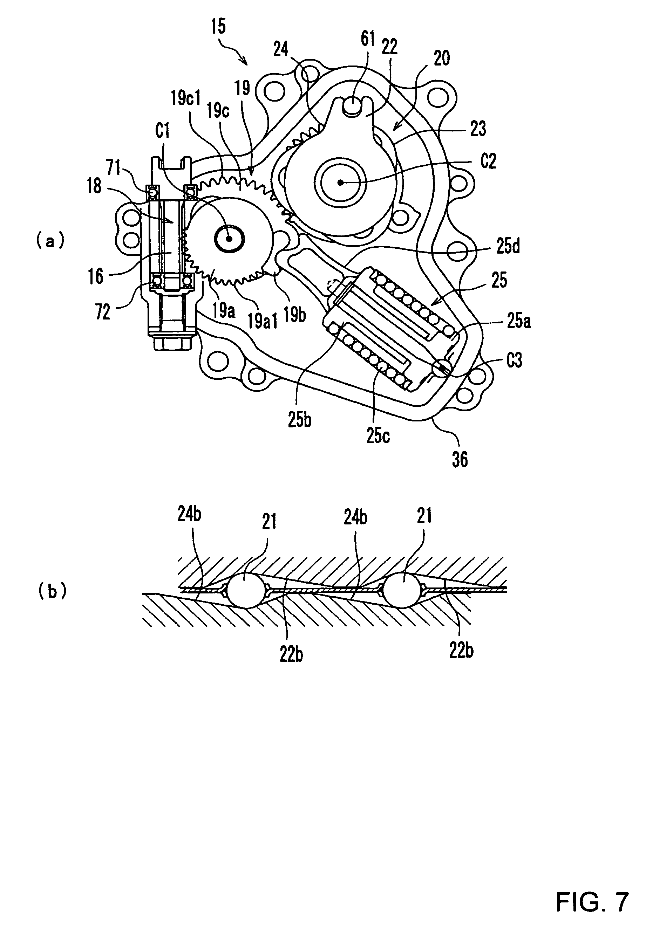

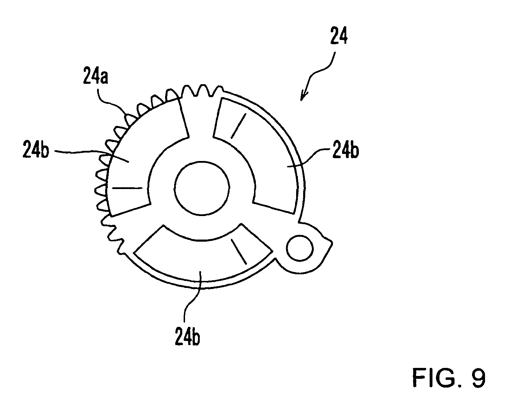

As shown in Fig. 7(a), the operating force transmission mechanism 15 has a worm shaft 16 which is connected to the drive shaft 14B of the clutch actuator 14, a first solid of revolution 19 which engages with the worm shaft 16, a second solid of revolution 24 which engages with the first solid of revolution 19 (see Fig. 9) and a ball cam 20 which converts the torque of the second solid of revolution 24 into the force in the axial direction of the slide shaft 455. Here, as described later, in the present embodiment, the second solid of revolution 24 constitutes a part of the ball cam 20. However, it is also possible to separate the second solid of revolution 24 from the ball cam 20.

The worm shaft 16 extends in the vertical direction. A helical groove is formed on the outer peripheral surface of the worm shaft 16. The worm shaft 16 is supported by bearings 71, 72 rotatably. In the present embodiment, the drive shaft 14B of the clutch actuator 14 and the worm shaft 16 are disposed separately. However, it is also possible that the drive shaft 14B and the worm shaft 16 are integrated.

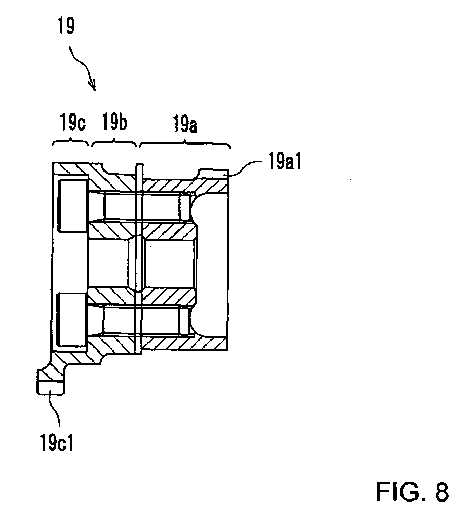

As shown in Fig. 7(a) and Fig. 8, the first solid of revolution 19 has a worm wheel portion 19a, a cam portion 19b and a gear portion 19c in this order from the right side to the left side (from the front face to the back face of the sheet of Fig. 7(a)). As shown in Fig. 7(a), teeth 19a1 are formed around a part of the outer peripheral side of the worm wheel portion 19a. The worm wheel portion 19a is engaged with the worm shaft 16. Accordingly, the torque of the worm shaft 16 is transmitted to the worm wheel portion 19a, and the first solid of revolution 19 rotates in accordance with the worm shaft 16. The worm shaft 16 and the worm wheel portion 19a of the first solid of revolution 19 constitute a worm gear 18.

The cam portion 19b of the first solid of revolution 19 is the part which is contacted to a contact portion 25d of an assist spring unit 25 which is described later.

Teeth 19c1 are formed at the gear portion 19c of the first solid of revolution 19. The radius of the gear portion 19c (to be exact, the distance from the rotating center C1 of the first solid of revolution 19 to the teeth 19c1) is greater than the radius of the worm wheel portion 19a (to be exact, the distance from the rotating center C1 of the first solid of revolution 19 to the teeth 19a1). However, the relation in length between the radius of the gear portion 19c and the radius of the worm wheel portion 19a may be the opposite. Further, the radius of the gear portion 19c and the radius of the worm wheel portion 19a may be the same as well.

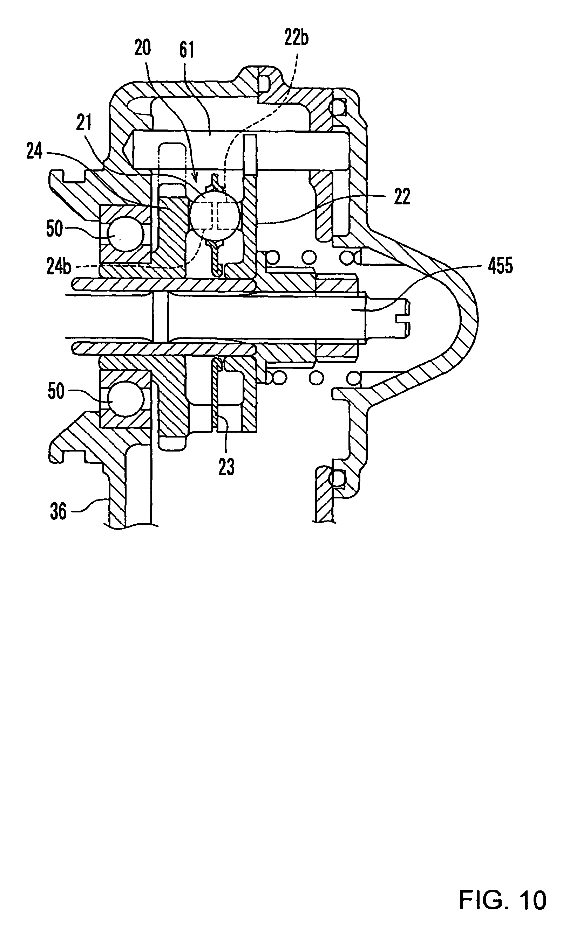

As shown in Fig. 7(a) and Fig. 10, the ball cam 20 has a cam plate 22, a ball plate 23 and the second solid of revolution 24 in this order from the right side to the left side (from the front face to the back face of the sheet of Fig. 7(a)).

The cam plate 22 is fixed to the slide shaft 455 and is movable in the axial direction of the slide shaft 455 together with the slide shaft 455. However, rotation of the cam plate 22 around the slide shaft 455 is restricted by a stopper pin 61.

The ball plate 23 supports three balls 21 which are arranged at even intervals in the periphery direction so as to be able to roll. Here, the number of the balls 21 is not limited to three.

As shown in Fig. 10, the second solid of revolution 24 is supported by a bearing 50 so as to be able to rotate around the slide shaft 455. On the other hand, the second solid of revolution 24 is arranged so as not to move in the axial direction of the slide shaft 455. As shown in Fig. 9, teeth 24a are formed at the second solid of revolution 24. The teeth 24a is engaged with the teeth 19c1 of the gear portion 19c of the first solid of revolution 19 (see Fig. 7(a)). Accordingly, the first solid of revolution 19 and the second solid of revolution 24 are connected with each other via the teeth 19c1 and the teeth 24a. Therefore, the torque of the first solid of revolution 19 is transmitted to the second solid of revolution 24.

Cam grooves 22b, 24b which are slanted along the circumferential direction are respectively formed at the left side face (the lower side face in Fig. 7(a)) of the cam plate 22 and the right side face (the upper side face in Fig. 7(a) and Fig. 9) of the second solid of revolution 24 (see also Fig. 7(b)). In this manner, the second solid of revolution 24 also functions as the cam plate. When the second solid of revolution 24 rotates, the relative position between the cam groove 22b of the cam plate 22 and the cam groove 24b of the second solid of revolution 24 is shifted. Then, the balls 21 climb from the cam grooves 22b, 24b. Accordingly, the cam plate 22 is pushed rightward by the balls 21 and is slid rightward. Correspondingly, the slide shaft 455 also slides rightward and the pressure plate 451 also moves rightward. As a result, the clutch 11 is switched from an engaged state to a disengaged state.

As shown in Fig. 7(a), in the present embodiment, an assist spring unit 25 which generates assist force for assisting disengaging of the clutch 11 is disposed at the operating force transmission mechanism 15. The assist spring unit 25 has a first case 25a which is approximately cylindrical, a second case 25b which is approximately cylindrical and is combined with the first case 25a, a compression coil spring 25c which is arranged between the first case 25a and the second case 25b and the contact portion 25d which is disposed at the top end of the second case 25b. The contact portion 25d is in contact with the cam portion 19b of the abovementioned first solid of revolution 19. The first case 25a and the second case 25b are urged by the compression coil spring 25c in the direction to be apart from each other. Since the second case 25b is urged toward the contact portions 25d side by the compression coil spring 25c, the contact portion 25d is urged to be pressed to the cam portion 19b of the first solid of revolution 19. In this manner, the contact portion 25d and the cam portion 19b are connected without utilizing fastenings such as bolts.

The bottom side of the first case 25a is pivotally supported by the crankcase 36. Therefore, the assist spring unit 25 is configured to be free to swing having a swinging center C3 as the center.

A shift change of the motorcycle 1 is performed as follows. First, the rider 100 operates the automatic transmission operation switch 136 or 137. Then, a control system (not shown in the figures) of the motorcycle 1 controls the clutch actuator 14 and the shift actuator 70. Accordingly, a series of operations of disengaging the clutch 11, changing the transmission gear of the transmission 43 and engaging the clutch 11 are performed.

Next, the operation of disengaging and engaging the clutch 11 by the clutch actuator 14 is described.

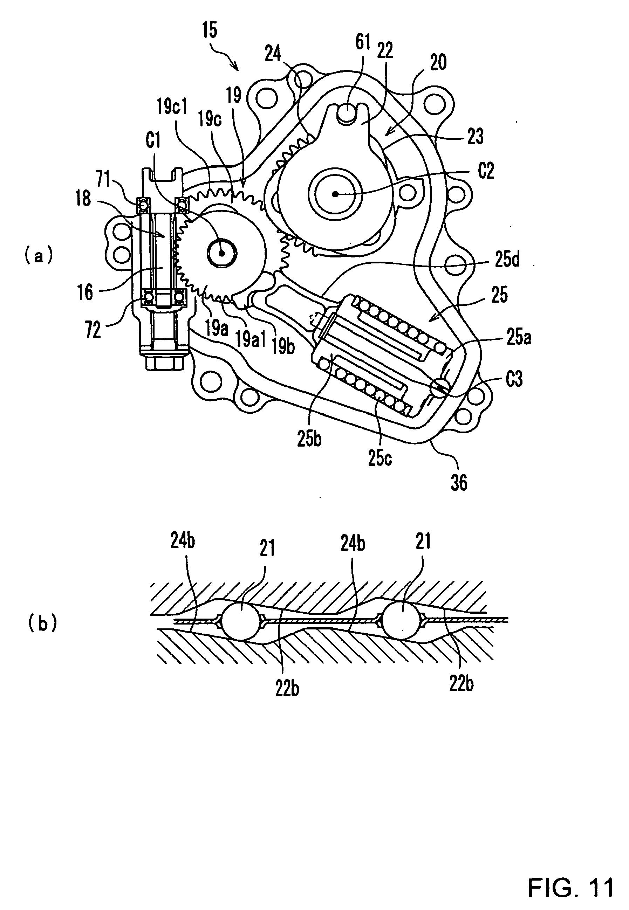

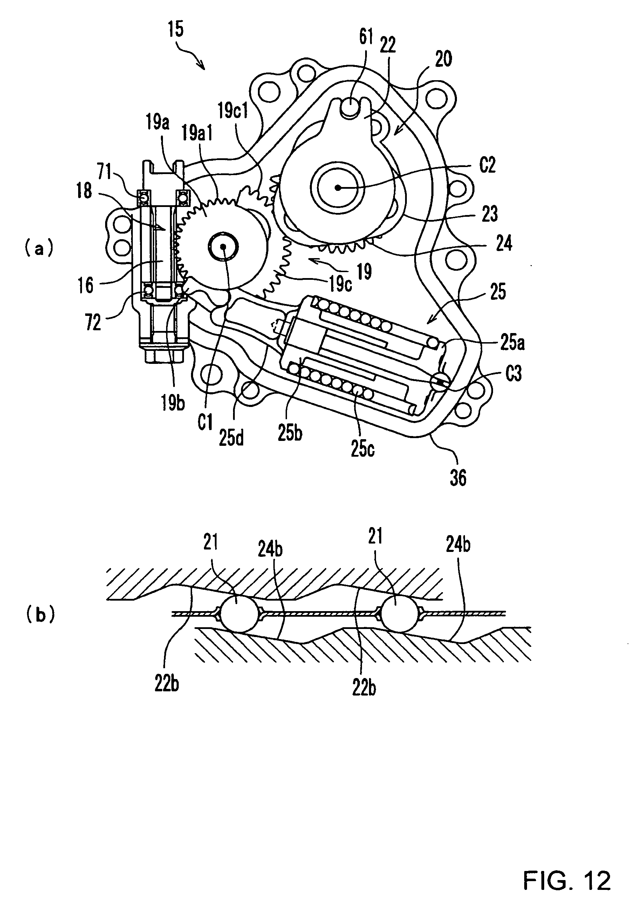

Fig. 7(a), Fig. 11(a) and Fig. 12(a) are side views of the operating force transmission mechanism 15. Fig. 7(a) shows the clutch 11 when it is engaged. Fig. 11(a) shows the clutch 11 when it starts to be disengaged. Fig. 12(a) shows the clutch 11 when being disengaged.

As shown in > and Fig. 11(a), when the clutch actuator 14 operates and the worm shaft 16 rotates, the first solid of revolution 19 rotates in the clockwise direction. Since the first solid of revolution 19 and the second solid of revolution 24 engage with each other, the second solid of revolution 24 rotates in the counterclockwise direction when the first solid of revolution 19 rotates in the clockwise direction. Here, the area from the position where the clutch 11 is engaged (the position shown in Fig. 7(a)) to the position at which the clutch 11 starts to be disengaged (the position shown in Fig. 11(a)) is so-called a play area. A large load is not applied to the clutch actuator 14 within this area. At the starting position of disengagement, the swinging center C3 of the assist spring unit 25, the contacting point between the contact portion 25d of the assist spring unit 25 and the cam portion 19b of the first solid of the revolution 19 and the rotating center C1 of the first solid of revolution 19 are aligned in a straight line. Therefore, the urging force of the assist spring unit 25 does not function as the force to rotate the first solid of revolution 19. In other words, the assist force of the assist spring unit 25 becomes zero.

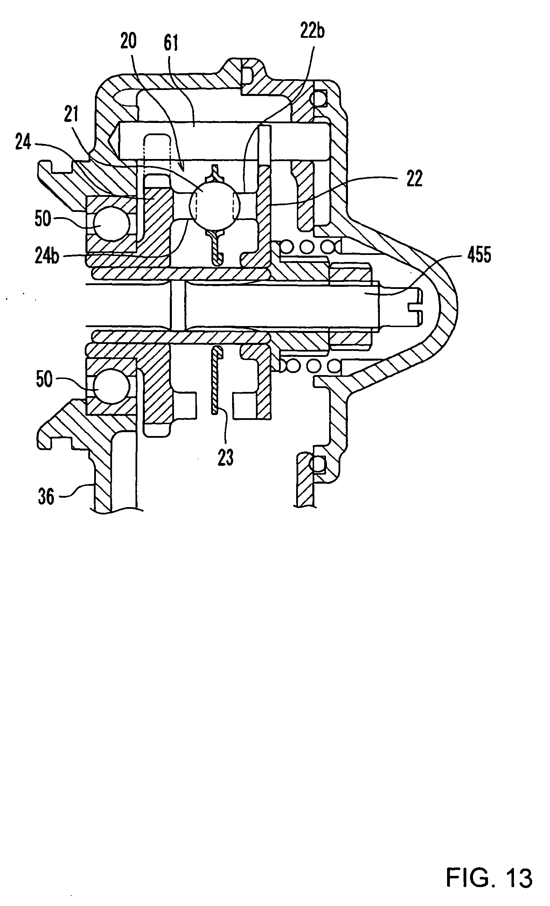

When the worm shaft 16 rotates farther from the starting position of disengagement, the first solid of revolution 19 rotates farther in the clockwise direction. Then, the second solid of revolution 24 rotates farther in the counterclockwise direction in accordance with the rotation of the first solid of revolution 19. Accordingly, as shown in Fig. 12(b), the balls 21 of the ball plate 23 of the ball cam 20 climb to some extent within the cam groove 22b of the cam plate 22 and the cam groove 24b of the second solid of revolution 24. As a result, the cam plate 22 is pushed out in the direction to disengage the clutch 11 by the balls 21. Specifically, the cam plate 22 is pushed rightward of the vehicle and is moved rightward together with the slide shaft 455 (see Fig. 13). In this manner, the pressure plate 451 is moved rightward and the clutch 11 is disengaged.

Here, as shown in Fig. 12(a), when the first solid of revolution 19 rotates in the clockwise direction beyond the starting position of disengagment, the contacting point between the contact portion 25d of the assist spring unit 25 and the cam portion 19b of the first solid of revolution 19 shifts downward in Fig. 12(a) beyond the line which connects the swinging center C3 of the assist spring unit 25 and the rotating center C1 of the first solid of revolution 19. Therefore, the urging force of the assist spring unit 25 functions as the force to rotate the first solid of revolution 19 in the clockwise direction, namely, as the assist force in the direction to disengage the clutch 11. In this manner, the load of the clutch actuator 14 is reduced.

The abovementioned is the operation when the clutch 11 is disengaged. Here, when the clutch 11 which is disengaged is to be engaged, the inverse operation to the abovementioned operation is performed.

As mentioned above, with the power unit 35 according to the present embodiment, the clutch actuator 14 and the operating force transmission mechanism 15 are arranged at the right end portion of the inside of the casing 39 of the power unit 35 as shown in Fig. 5, thereby the clutch actuator 14 and the operating force transmission mechanism 15 do not project to the outside of the casing 39.

Further, as shown in Fig. 7(a), the operating force transmission mechanism 15 has a plurality of solids of revolution which axes are deviated from each other (namely, the first solid of revolution 19 and the second solid of revolution 24). The operating force is transmitted from the clutch actuator 14 to the clutch 11 via the solids of revolution 19, 24. Accordingly, without disposing a rod or the like which farther projects in one direction as is conventionally done, the operating force can be transmitted from the clutch actuator 14 to the clutch 11. Therefore, the operating force transmission mechanism 15 can be compactly arranged in the casing 39.

Furthermore, since the clutch actuator 14 is arranged so that the drive shaft 14B extends in the direction being perpendicular to the crosswise direction, projecting of the clutch actuator 14 in the crosswise direction can be prevented. Therefore, the clutch actuator 14 can be compactly arranged within the casing 39.

According to the present embodiment, by combining the abovementioned advantages, downsizing of the power unit 35 which has the clutch actuator 14 can be achieved.

In addition, the power unit 35 of the present embodiment has the assist spring unit 25 which assists the disengagement of the clutch 11. The assist spring unit 25 is configured to swing in the plane which is perpendicular to the axial direction of the slide shaft 455.

The assist spring unit 25 assists the disengagement of the clutch 11 as mentioned above, and thereby the required drive force of the clutch actuator 14 can be suppressed to relatively small. Accordingly, the clutch actuator 14 can be further downsized, and the downsizing of the power unit 35 can in turn be expedited. In addition, since the assist spring unit 25 swings in the plane which is perpendicular to the axial direction of the slide shaft 455, projecting of the assist spring unit 25 in the crosswise direction (namely, the vehicle width direction) can be suppressed. In this manner, further downsizing of the power unit can be achieved.

Further, as shown in Fig. 7(a), the rotating center C1 of the first solid of revolution 19, the rotating center C2 of the second solid of revolution 24 and the swinging center C3 of the assist spring unit 25 are not aligned in a straight line in the side view of the inside of the power unit 35. In other words, the rotating center C1, the rotating center C2 and the swinging center C3 are arranged to be apexes of a triangle.

If the rotating center C1, the rotating center C2 and the swinging center C3 are arranged in a straight line, the first solid of revolution 19, the second solid of revolution 24 and the assist spring unit 25 will be arranged in a long straight line. However, in the present embodiment, the rotating center C1, the rotating center C2 and the swinging center C3 are not arranged in a straight line, and thereby the first solid of revolution 19, the second solid of revolution 24 and the assist spring unit 25 are not arranged to be long in one direction. Therefore, the operating force transmission mechanism 15 and the assist spring unit 25 can be compactly arranged. Further, the transmitting distance of the operating force and the assisting force can be shortened. As a result, further downsizing of the power unit 35 can be achieved.

Here, the clutch 11 of the present embodiment is a multiplate clutch. As shown in Fig. 4, the operating force transmission mechanism 15 and the assist spring unit 25 are arranged inside an outer profile 11a of the abovementioned multiplate clutch 11 in the side view. Therefore, further downsizing of the power unit 35 can be achieved.

As shown in Fig. 5, in the power unit 35 of the present embodiment, the clutch 11 is arranged at the right side of the center in the crosswise direction within the casing 39. The clutch actuator 14 and the operating force transmission mechanism 15 are also arranged to the right side of the center in the crosswise direction within the casing 39. Namely, the clutch actuator 14 and the operating force transmission mechanism 15 are arranged to the side in the crosswise direction where the clutch 11 is arranged in the casing 39. Therefore, the distance between the clutch actuator 14 and the clutch 11 becomes short and the operating force transmission mechanism 15 can be downsized.

Further, as shown in Fig. 5, the power unit 35 of the present embodiment has the four-cylinder engine 30 which includes the crankshaft 31 extending in the crosswise direction in the casing 39. At least a part of the clutch actuator 14 and the operating force transmission mechanism 15 is arranged to the center side in the crosswise direction relative to the right end portion 31a of the crankshaft 31.

In this manner, the at least a part of the clutch actuator 14 and the operating force transmission mechanism 15 does not project beyond the crankshaft 31 in the crosswise direction, thereby the power unit 35 can be more compact in the crosswise direction, namely, can be slimmer.

Further, the casing 39 of the power unit 35 of the present embodiment includes the crankcase 36 and the cover 38 which are assembled together. In the plane view, as the mating surface 39a between the crankcase 36 and the cover 38 comes closer to the rear side, it tilts more to the center side in the crosswise direction. The clutch actuator 14 is arranged posterior to the slide shaft 455. That is, in the power unit 35 according to the present embodiment, the mating surface 39a is tilted, thereby a space at the right side of the crankcase 36 becomes larger toward the rear. In order to effectively utilize this space, the clutch actuator 14 is arranged posterior to the slide shaft 455 in the present embodiment. Therefore, the clutch actuator 14 can be further compactly arranged.

As shown in Fig. 4, in the present embodiment, the clutch actuator 14 is an electric motor having the drive shaft 14B which extends in the vertical direction and the motor body 14A which is arranged above the drive shaft 14B. With such an arrangement, the lengths of the electric motor 14 in the longitudinal direction and the crosswise direction become short. Therefore, the power unit 35 can be formed compactly in the longitudinal direction and the crosswise direction.

Further, in the power unit 35 of the present embodiment, a force direction converting mechanism which converts the torque of the second solid of revolution 24 into the force in the axial direction of the slide shaft 455 is the ball cam 20. By utilizing the ball cam 20 as mentioned above, the transmission efficiency of the operating force from the clutch actuator 14 to the slide shaft 455 is increased and the force direction converting mechanism itself can be compactly formed. Further, a ball cam can obtain a large speed reducing ratio in general, thereby a required speed reducing ratio of the other parts of the operating force transmission mechanism 15 can be suppressed to small. Accordingly, the structure of the other parts of the operating force transmission mechanism 15 can be simplified and further downsizing of the power unit 35 can be achieved.

The abovementioned embodiment is just one of the embodiments to actualize the present invention. The present invention can be actualized with other various forms.

In the abovementioned embodiment, the vehicle to which the power unit 35 for a vehicle according to the present invention is mounted is the motorcycle 1. However, the vehicle according to the present invention is not limited to the motorcycle 1, but can be another straddle-type vehicle. In addition, the vehicle according to the present invention can be a vehicle other than the straddle-type vehicles.

In the abovementioned embodiment, the operating force transmission mechanism 15 has two solids of revolution, which are the first solid of revolution 19 and the second solid of revolution 24. However, the number of the solids of revolution of the operating force transmission mechanism 15 can be two or more.

In the abovementioned embodiment, the force direction converting mechanism of the operating force transmission mechanism 15 is the ball cam 20. However, the force direction converting mechanism can be other than the ball cam 20. For example, a worm gear or the like can be utilized as the force direction converting mechanism.

As explained above, an embodiment of the present invention finds application as power unit for a vehicle which has a clutch actuator.

### Description of Reference Numerals

- 1: Motorcycle (Vehicle)
- 11: Clutch
- 11a: Outer profile of clutch
- 14: Clutch actuator
- 14A: Motor body
- 14B: Drive shaft
- 15: Operating force transmission mechanism
- 16: Worm shaft
- 19: First solid of revolution
- 19a: Worm wheel portion
- 20: Ball cam (Force direction converting mechanism)
- 24: Second solid of revolution
- 25: Assist spring unit (Elastic body)
- 30: Engine (Multi cylinder engine)
- 31: Crankshaft
- 31a: Right end portion of crankshaft (Shaft end portion)
- 36: Crankcase
- 38: Cover
- 39: Casing
- 39a: Mating surface between crankcase and cover
- 455: Slide shaft
- C1: Rotating center of first solid of revolution
- C2: Rotating center of second solid of revolution
- C3: Swinging center of assist spring unit

## Claims

1. A power unit (35) for a vehicle (1) comprising:
a clutch (11) which has a slide shaft (455) extending in a first, crosswise, direction and which is disengaged and engaged by moving the slide shaft (455) in a second, axial, direction;
a clutch actuator (14) which has a rotatable drive shaft (19B) ;
an operating force transmission mechanism (15) which connects the drive shaft (14B) of the clutch actuator (14) and the slide shaft (455) and which transmits the operating force of the clutch actuator (14) to the slide shaft (455); and
a casing (39) which accommodates the clutch (11), the clutch actuator (14) and the operating force transmission mechanism (15);
wherein the clutch actuator (14) is arranged so that the drive shaft (14B) extends in a direction being perpendicular to the crosswise direction; and
wherein the operating force transmission mechanism (15) comprises:
a worm shaft (16) which is disposed at the drive shaft (14B);
a first solid of revolution (19) which has a worm wheel portion (19a) that engages with the worm shaft (16) and which rotates about an axial center being parallel to an axial center of the slide shaft (455) in accordance with the rotation of the worm shaft (16);
**characterized in that**
the clutch actuator (14) and the operating force transmission mechanism (15) are arranged, in the crosswise direction of the casing (39), at the left end portion or the right end portion of the inside of the casing (39); and
the operating force transmission mechanism (15) comprises:
a second solid of revolution (24) which rotates about the axial center of the slide shaft (455) as viewed from the axial direction of the slide shaft (455) in accordance with the rotation of the first solid of revolution (19) ; and
a force direction converting mechanism (20) which converts torque of the second solid of revolution (24) into force in the axial direction of the slide shaft (455) and which moves the slide shaft (455) in the axial direction in accordance with the rotation of the second solid of revolution (24).

2. The power unit (35) according to claim 1, further comprising an elastic body (25) which is arranged in the casing (39), wherein the elastic body (25) is pivotally supported at one end to swing in a plane perpendicular to the axial direction of the slide shaft (455), is connected to the first solid of revolution (19) at the other end, and urges the first solid of revolution (19) in the direction to disengage the clutch (11) at least during a period that the clutch state is changing from a starting of disengagement to further disengaging direction.

3. The power unit (35) according to claim 2, wherein the rotating center (C1) of the first solid of revolution (19), the rotating center (C2) of the second solid of revolution (24) and the swinging center (C3) of the elastic body (25) are not arranged in a straight line in side view.

4. The power unit (35) according to claim 2 or claim 3, wherein the clutch (11) is a multiplate clutch and the operating force transmission mechanism (15) and the elastic body (25) are arranged inside the outer profile of the multiplate clutch in a side view.

5. The power unit (35) according to any one of the preceding claims, wherein the clutch (11) is arranged in the casing (39) at the left side or the right side with respect to the center in the crosswise direction of the vehicle (1) and the clutch actuator (14) and the operating force transmission mechanism (15) are arranged in the casing (39) at the side where the clutch (11) is arranged in the crosswise direction.

6. The power unit (35) according to any one of the preceding claims, comprising a multi cylinder engine (30) which has a crankshaft (31) extending in the crosswise direction in the casing (39), wherein at least a part of the clutch actuator (14) and the operating force transmission mechanism (15) is arranged closer to the center side in the crosswise direction of the vehicle (1) than an end portion of the crankshaft (31) at the side where the clutch actuator (14) and the operating force transmission mechanism (15) are disposed with respect to the crosswise direction.

7. The power unit (35) according to any one of the preceding claims, wherein the casing (39) is a crankcase (36) which at least covers the clutch (11) and a cover (38) which is attached to the crankcase (36) along a mating surface as a boundary, wherein the mating surface is tilted more and more to the center side in the crosswise direction of the vehicle (1) toward the rear side of the vehicle (1) in the plane view, wherein the cover (38) covers at least a part of the clutch actuator (14) and the slide shaft (455), wherein the clutch actuator (14) is arranged behind the slide shaft (455).

8. The power unit (35) according to any one of the preceding claims, wherein the clutch actuator (14) is an electric motor having a rotating shaft which extends in the vertical direction as the drive shaft (14B) and a cylindrical motor body (14A) which is arranged above the rotating shaft.

9. The power unit (35) according to any one of the preceding claims,
wherein the force direction converting mechanism (20) is a ball cam.

10. A vehicle (1) comprising the power unit (35) for a vehicle (1) according to any one of the preceding claims.

## Patentansprüche

1. Eine Antriebseinheit (35) für ein Fahrzeug (1), die folgende Merkmale aufweist:
eine Kupplung (11), die eine Gleitwelle (455) aufweist, die sich in einer ersten Querrichtung erstreckt, und die durch ein Bewegen der Gleitwelle (455) in einer zweiten Axialrichtung außer Eingriff gebracht und in Eingriff genommen wird;
ein Kupplungsbetätigungselement (14), das eine drehbare Antriebswelle (14B) auf weist;
einen Betätigungskraftübertragungsmechanismus (15), der die Antriebswelle (14B) des Kupplungsbetätigungselements (14) und die Gleitwelle (455) verbindet, und der die Betätigungskraft des Kupplungsbetätigungselements (14) auf die Gleitwelle (455) überträgt; und
ein Gehäuse (39), das die Kupplung (11), das Kupplungsbetätigungselement (14) und den Betätigungskraftübertragungsmechanismus (15) unterbringt;
wobei das Kupplungsbetätigungselement (14) so angeordnet ist, dass sich die Antriebswelle (14B) in einer Richtung erstreckt, die senkrecht zu der Querrichtung ist; und
wobei der Betätigungskraftübertragungsmechanismus (15) folgende Merkmale aufweist:
eine Schneckenwelle (16), die an der Antriebswelle (14B) angeordnet ist;
einen ersten Rotationskörper (19), der einen Schneckenradabschnitt (19a) aufweist, der die Schneckenwelle (16) in Eingriff nimmt, und der sich gemäß der Drehung der Schneckenwelle (16) um eine Axialmitte dreht, die parallel zu einer Axialmitte der Gleitwelle (455) ist;
**dadurch gekennzeichnet, dass**:
das Kupplungsbetätigungselement (14) und der Betätigungskraftübertragungsmechanismus (15) in der Querrichtung des Gehäuses (39) an dem linken Endabschnitt oder dem rechten Endabschnitt des Inneren des Gehäuses (39) angeordnet sind; und
der Betätigungskraftübertragungsmechanismus (15) folgende Merkmale aufweist:
einen zweiten Rotationskörper (24), der sich betrachtet von der Axialrichtung der Gleitwelle (455) gemäß der Drehung des ersten Rotationskörpers (19) um die Axialmitte der Gleitwelle (455) dreht; und
einen Kraftrichtungsumwandlungsmechanismus (20), der ein Drehmoment des zweiten Rotationskörpers (24) in eine Kraft in der Axialrichtung der Gleitwelle (455) umwandelt, und der die Gleitwelle (455) gemäß der Drehung des zweiten Rotationskörpers (24) in der Axialrichtung bewegt.

2. Die Antriebseinheit (35) gemäß Anspruch 1, die ferner einen elastischen Körper (25) aufweist, der in dem Gehäuse (39) angeordnet ist, wobei der elastische Körper (25) an einem Ende schwenkbar gelagert ist, um in einer Ebene zu schwingen, die senkrecht zu der Axialrichtung der Gleitwelle (455) ist, an dem anderen Ende mit dem ersten Rotationskörper (19) verbunden ist und den ersten Rotationskörper (19) in die Richtung treibt, um die Kupplung (11) zumindest während eines Zeitraums außer Eingriff zu bringen, zu dem sich der Kupplungszustand von einem Beginn einer Außereingreifnahme zu einer weiteren Außereingreifnahmerichtung verändert.

3. Die Antriebseinheit (35) gemäß Anspruch 2, bei der die Rotationsmitte (C1) des ersten Rotationskörpers (19), die Rotationsmitte (C2) des zweiten Rotationskörpers (24) und die Schwingmitte (C3) des elastischen Körpers (25) in einer Seitenansicht nicht in einer geraden Linie angeordnet sind.

4. Die Antriebseinheit (35) gemäß Anspruch 2 oder Anspruch 3, bei der die Kupplung (11) eine Mehrplattenkupplung ist und der Betätigungskraftübertragungsmechanismus (15) und der elastische Körper (25) in einer Seitenansicht innerhalb des äußeren Profils der Mehrplattenkupplung angeordnet sind.

5. Die Antriebseinheit (35) gemäß einem der vorherigen Ansprüche, bei der die Kupplung (11) in Bezug auf die Mitte in der Querrichtung des Fahrzeugs (1) in dem Gehäuse (39) auf der linken Seite oder der rechten Seite angeordnet ist und das Kupplungsbetätigungselement (14) und der Betätigungskraftübertragungsmechanismus (15) in dem Gehäuse (39) an der Seite, an der die Kupplung (11) angeordnet ist, in der Querrichtung, angeordnet sind.

6. Die Antriebseinheit (35) gemäß einem der vorherigen Ansprüche, die einen Mehrzylindermotor (30) aufweist, der eine Kurbelwelle (31) aufweist, die sich in der Querrichtung in dem Gehäuse (39) erstreckt, wobei zumindest ein Teil des Kupplungsbetätigungselements (14) und des Betätigungskraftübertragungsmechanismus (15) in der Querrichtung des Fahrzeugs (1) näher an der Mittenseite angeordnet ist als ein Endabschnitt der Kurbelwelle (31) an der Seite, an der das Kupplungsbetätigungselement (14) und der Betätigungskraftübertragungsmechanismus (15) angeordnet sind, in Bezug auf die Querrichtung.

7. Die Antriebseinheit (35) gemäß einem der vorherigen Ansprüche, bei der das Gehäuse (39) ein Kurbelgehäuse (36) ist, das zumindest die Kupplung (11) bedeckt, und eine Abdeckung (38), die entlang einer Passfläche als Grenze an dem Kurbelgehäuse (36) angebracht ist, wobei die Passfläche in der Draufsicht in der Querrichtung des Fahrzeugs (1) in Richtung der Rückseite des Fahrzeugs (1) mehr und mehr zu der Mittenseite geneigt ist, wobei die Abdeckung (38) zumindest einen Teil des Kupplungsbetätigungselements (14) und der Gleitwelle (455) bedeckt, wobei das Kupplungsbetätigungselement (14) hinter der Gleitwelle (455) angeordnet ist.

8. Die Antriebseinheit (35) gemäß einem der vorherigen Ansprüche, bei der das Kupplungsbetätigungselement (14) ein Elektromotor ist, der eine drehbare Welle, die sich in der Vertikalrichtung erstreckt, als die Antriebswelle (14B) und einen zylindrischen Motorkörper (14A), der oberhalb der Rotationswelle angeordnet ist, aufweist.

9. Die Antriebseinheit (35) gemäß einem der vorherigen Ansprüche,
bei der der Kraftrichtungsumwandlungsmechanismus (20) eine Kugelnocke ist.

10. Ein Fahrzeug (1) mit der Antriebseinheit (35) für ein Fahrzeug (1) gemäß einem der vorherigen Ansprüche.

## Revendications

1. Unité d'alimentation (35) pour un véhicule (1), comprenant:
un embrayage (11) qui présente un arbre coulissant (455) s'étendant dans une première direction de la largeur et qui est dégagé et engagé en déplaçant l'arbre coulissant (455) dans une deuxième direction axiale;
un actionneur d'embrayage (14) qui présente un arbre d'entraînement rotatif (14B);
un mécanisme de transmission de force de fonctionnement (15) qui connecte l'arbre d'entraînement (14B) de l'actionneur d'embrayage (14) et l'arbre coulissant (455) et qui transmet la force d'actionnement de l'actionneur d'embrayage (14) à l'arbre coulissant (455); et
un boîtier (39) qui abrite l'embrayage (11), l'actionneur d'embrayage (14) et le mécanisme de transmission de force de fonctionnement (15;
dans laquelle l'actionneur d'embrayage (14) est disposé de sorte que l'arbre d'entraînement (14B) s'étende dans une direction perpendiculaire à la direction de la largeur; et
dans laquelle le mécanisme de transmission de force de fonctionnement (15) comprend:
un arbre à vis sans fin (16) qui est disposé sur l'arbre d'entraînement (14B);
un premier solide de rotation (19) qui présente une partie de roue à vis sans fin (19a) qui engrène l'arbre à vis sans fin (16) et qui tourne autour d'un centre axial parallèle à un centre axial de l'arbre coulissant (455) selon la rotation de l'arbre à vis sans fin (16);
**caractérisé par le fait que**
l'actionneur d'embrayage (14) et le mécanisme de transmission de force de fonctionnement (15) sont disposés, dans la direction de la largeur transversale du boîtier (39), dans la partie extrême gauche ou la partie extrême droite de l'intérieure du boîtier (39); et
le mécanisme de transmission de force de fonctionnement (15) comprend:
un deuxième solide de rotation (24) qui tourne autour du centre axial de l'arbre coulissant (455), vu dans la direction axiale de l'arbre coulissant (455) selon la rotation du premier solide de rotation (19); et
un mécanisme de conversion de direction de force (20) qui convertit le couple du deuxième solide de rotation (24) en une force dans la direction axiale de l'arbre coulissant (455) et qui déplace l'arbre coulissant (455) dans la direction axiale selon la rotation du deuxième solide de rotation (24).

2. Unité d'alimentation (35) selon la revendication 1, comprenant par ailleurs un corps élastique (25) qui est disposé dans le boîtier (39), dans laquelle le corps élastique (25) est supporté en pivotement à une extrémité pour pivoter dans un plan perpendiculaire à la direction axiale de l'arbre coulissant (455), est connecté au premier solide de rotation (19) à l'autre extrémité, et pousse le premier solide de rotation (19) dans la direction pour dégager l'embrayage (11) au moins pendant une période pendant laquelle l'état de l'embrayage change d'une direction de début de dégagement à une direction de dégagement plus avancé.

3. Unité d'alimentation (35) selon la revendication 2, dans laquelle le centre de rotation (C1) du premier solide de rotation (19), le centre de rotation (C2) du deuxième solide de rotation (24) et le centre de pivotement (C3) du corps élastique (25) ne sont pas disposés en ligne droite, en vue latérale.

4. Unité d'alimentation (35) selon la revendication 2 ou la revendication 3, dans laquelle l'embrayage (11) est un embrayage multiple et le mécanisme de transmission de force de fonctionnement (15) et le corps élastique (25) sont disposés à l'intérieur du profil extérieur de l'embrayage multiple, en vue latérale.

5. Unité d'alimentation (35) selon l'une quelconque des revendications précédentes, dans laquelle l'embrayage (11) est disposé dans le boîtier (39) du côté gauche ou du côté droit par rapport au centre dans la direction de la largeur du véhicule (1) et l'actionneur d'embrayage (14) et le mécanisme de transmission de force de fonctionnement (15) sont disposés dans le boîtier (39) du côté où l'embrayage (11) est disposé dans la direction de la largeur.

6. Unité d'alimentation (35) selon l'une quelconque des revendications précédentes, comprenant un moteur multicylindre (30) qui présente un vilebrequin (31) s'étendant dans la direction de la largeur dans le boîtier (39), dans laquelle au moins une partie de l'actionneur d'embrayage (14) et du mécanisme de transmission de force de fonctionnement (15) est disposée plus près du côté central dans la direction de la largeur du véhicule (1) qu'une partie d'extrémité du vilebrequin (31) du côté où l'actionneur d'embrayage (14) et le mécanisme de transmission de force de fonctionnement (15) sont disposés par rapport à la direction de la largeur.

7. Unité d'alimentation (35) selon l'une quelconque des revendications précédentes, dans laquelle le boîtier (39) est un carter (36) qui recouvre au moins l'embrayage (11) et un couvercle (38) qui est fixé au carter (36) le long d'une surface coïncidente comme limite, dans laquelle la surface coïncidente est de plus en plus inclinée vers le côté central dans la direction de la largeur du véhicule (1) vers le côté arrière du véhicule (1), en vue en plan, dans laquelle le couvercle (38) recouvre au moins une partie de l'actionneur d'embrayage (14) et de l'arbre coulissant (455), dans laquelle l'actionneur d'embrayage (14) est disposé derrière l'arbre coulissant (455).

8. Unité d'alimentation (35) selon l'une quelconque des revendications précédentes, dans laquelle l'actionneur d'embrayage (14) est un moteur électrique présentant un arbre de rotation qui s'étend dans la direction verticale comme arbre d'entraînement (14B) et un corps de moteur cylindrique (14A) qui est disposé au-dessus de l'arbre de rotation.

9. Unité d'alimentation (35) selon l'une quelconque des revendications précédentes,
dans laquelle le mécanisme de conversion de direction de force (20) est une came à sphère.

10. Véhicule (1) comprenant l'unité d'alimentation (35) pour un véhicule (1) selon l'une quelconque des revendications précédentes.
